# EUROPEAN PATENT APPLICATION

(11) **EP 2 555 301 A1**
(43) Date of publication of application: **06.02.2013**
(21) Application number: 11759579.3
(22) Date of filing: 25.03.2011
(51) Int. Cl.: H01M 8/06, C01B 3/38, H01M 8/04, H01M 8/12

(54) **FUEL CELL SYSTEM, REFORMER SYSTEM, AND METHOD FOR DRIVING FUEL CELL SYSTEM**

(30) Priority: 26.03.2010 JP 2010072885
(71) Applicant: JX Nippon Oil & Energy Corporation, Chiyoda-ku Tokyo 100-8162 (JP)
(72) Inventor: ISHIDA Tomotaka, Tokyo 100-8162 (JP)
(74) Representative: Grünecker, Kinkeldey, Stockmair & Schwanhäusser
(86) International application number: PCT/JP2011/057367
(87) International publication number: WO 2011/118775

(57) **Abstract**

The disclosed fuel cell system includes a reformer that generates a reformed gas containing hydrogen by reforming a raw fuel and water with a reforming catalyst, a fuel cell that generates power in a cell unit using the reformed gas, a raw fuel introducing unit that introduces the raw fuel into the reforming catalyst, an unreformed gas generation information acquisition unit that acquires information on unreformed gas generation in the reforming catalyst, and a control unit that performs introduction amount reduction control of causing the raw fuel introducing unit to reduce the introduction amount of the raw fuel on the basis of the information on unreformed gas generation acquired by the unreformed gas generation information acquisition unit.

## Description

### Technical Field

The present invention relates to a reformer system including a reformer that generates a reformed gas by reforming a raw fuel with a reforming catalyst, a fuel cell system further including a fuel cell that uses the reformed gas as fuel, and a operation method thereof.

### Background Art

As a conventional fuel cell system, there is known one including fuel electrode nitrogen supply equipment that feeds nitrogen stored in a liquid nitrogen storage tank to a fuel electrode of a fuel cell when stopping power generation in a solid oxide fuel cell (see Patent Literature 1, for example). With such a fuel cell system, when stopping power generation in a solid oxide fuel cell, nickel and other materials used for a fuel electrode can be prevented from swelling by oxidation in the fuel cell, and thus it becomes possible to avoid damage of an electrolyte made of yttria-stabilized zirconia, for example.

### Citation List

### Patent Literature

[Patent Literature 1] Japanese Patent Application Laid-Open Publication No. 2004-220942

### Summary of Invention

### Technical Problem

In a conventional fuel cell as described above, the fuel cell can be avoided from being damaged when stopping power generation in the fuel cell, but measures against such damage during power generation in the fuel cell are not considered. During power generation in the fuel cell, when reforming a raw fuel for generating power with a reforming catalyst and feeding the reformed gas to the fuel cell, a situation can occur in which the fuel gas without being sufficiently reformed and in a state of unreformed gas flows into the fuel cell. When such a situation occurs, the conventional fuel cell system has a problem in which the fuel cell that is generating power may be damaged by the inflow of the unreformed gas.

In view of this, the present invention has been made to solve the above-mentioned technical problem, and it is an object to provide a fuel cell system, a reformer system, and a method for operating the fuel cell system that make it possible to avoid the fuel cell during power generation from being damaged.

### Solution to Problem

To achieve the above object, a fuel cell system according to the present invention includes a reformer that generates a reformed gas containing hydrogen by reforming a raw fuel and water with a reforming catalyst; a fuel cell that generates power in a cell unit using the reformed gas; a raw fuel introducing unit that introduces the raw fuel into the reforming catalyst; an unreformed gas generation information acquisition unit that acquires information on unreformed gas generation in the reforming catalyst; and a control unit that performs introduction amount reduction control of causing the raw fuel introducing unit to reduce an introduction amount of the raw fuel on the basis of the information on unreformed gas generation acquired by the unreformed gas generation information acquisition unit.

In addition, a reformer system according to the present invention includes a reformer that generates a reformed gas containing hydrogen by reforming a raw fuel and water with a reforming catalyst; a raw fuel introducing unit that introduces the raw fuel into the reforming catalyst; an unreformed gas generation information acquisition unit that acquires information on unreformed gas generation in the reforming catalyst; and a control unit that performs introduction amount reduction control of causing the raw fuel introducing unit to reduce an introduction amount of the raw fuel on the basis of the information on unreformed gas generation acquired by the unreformed gas generation information acquisition unit.

Furthermore, a method for operating a fuel cell system is a method for operating a fuel cell system that includes a reformer that generates a reformed gas containing hydrogen by reforming a raw fuel and water with a reforming catalyst, a fuel cell that generates power in a cell unit using the reformed gas, a raw fuel introducing unit that introduces the raw fuel into the reforming catalyst, and an unreformed gas generation information acquisition unit that acquires information on unreformed gas generation in the reforming catalyst, the method including an introduction amount reduction control step of causing the raw fuel introducing unit to reduce an introduction amount of the raw fuel on the basis of the information on unreformed gas generation acquired by the unreformed gas generation information acquisition unit.

In the fuel cell system, the reformer system, and the method of operating the fuel cell system, information on unreformed gas generation in the reforming catalyst is acquired by the unreformed gas generation information acquisition unit and, based on this unreformed gas generation information, the introduction amount of the raw fuel is reduced by the raw fuel introducing unit under the introduction amount reduction control of the control unit. Herein, "the introduction amount" means "the quantity introduced per unit time". A reaction that generates a reformed gas by reforming a raw fuel and water with the reforming catalyst is an endothermic reaction. Accordingly, the introduction amount of the raw fuel is reduced, whereby the amount of absorbed heat decreases together with the generated amount of the reformed gas. This makes it possible to prevent temperature of the reforming catalyst from falling to an unreformed gas generation temperature. Because of this, generation of an unreformed gas is prevented and the reformed gas is fed to the fuel cell. Therefore, the fuel cell during power generation can be avoided from being damaged. Herein, the information on unreformed gas generation is information on possibility that the unreformed gas is generated.

In addition, the fuel cell system can be configured in such a manner that the control unit further performs power generation reduction control of causing the fuel cell to reduce the amount of power generation.

With this fuel cell system, when the introduction amount of the raw fuel is reduced, along with this reduction, the generated amount of the reformed gas decreases, but at the same time when the introduction amount of the raw fuel is reduced, the fuel cell is caused to reduce the amount of power generation. Accordingly, balance between the reformer and the fuel cell can be preferably maintained.

In addition, the fuel cell system can be configured in such a manner that the unreformed gas generation information is temperature of the reforming catalyst and the unreformed gas generation information acquisition unit is a catalyst temperature detecting unit for detecting the temperature of the reforming catalyst.

The temperature of the reforming catalyst has a great influence on whether the unreformed gas is generated or not. With this fuel cell system, because the temperature of the reforming catalyst is used as the unreformed gas generation information, generation of the unreformed gas is more surely prevented.

In addition, the fuel cell system can be configured in such a manner that the control unit, when the temperature detected by the catalyst temperature detecting unit is equal to or lower than a first threshold that is higher than an unreformed gas generation temperature, performs the introduction amount reduction control of causing the raw fuel introducing unit to reduce the introduction amount of the raw fuel.

With this fuel cell system, when the temperature of the reforming catalyst detected by the catalyst temperature detecting unit is equal to or lower than the first threshold that is higher than the unreformed gas generation temperature, under the introduction amount reduction control of the control unit, the raw fuel introducing unit is caused to reduce the introduction amount of the raw fuel. The reaction generating the reformed gas by reforming the raw fuel and water with the reforming catalyst is an endothermic reaction. Accordingly, the introduction amount of the raw fuel is reduced, whereby the amount of absorbed heat decreases together with the generated amount of the reformed gas. This makes it possible to prevent the temperature of the reforming catalyst from falling to the unreformed gas generation temperature. Because of this, generation of the unreformed gas is prevented and the reformed gas is fed to the fuel cell. Therefore, the fuel cell during power generation can be avoided from being damaged.

In addition, the fuel cell system can be configured in such a manner that the control unit, when the temperature detected by the catalyst temperature detecting unit is equal to or lower than the first threshold that is higher than the unreformed gas generation temperature, performs the power generation reduction control of causing the fuel cell to reduce the amount of power generation.

With this fuel cell system, when the introduction amount of the raw fuel is reduced, along with this reduction, the generated amount of the reformed gas decreases, but at the same time when the introduction amount of the raw fuel is reduced, the fuel cell is caused to reduce the amount of power generation. Accordingly, balance between the reformer and the fuel cell can be preferably maintained.

In addition, the fuel cell can be configured in such a manner that the first threshold is predetermined in accordance with the introduction amount of the raw fuel into the reforming catalyst in a case that the introduction amount reduction control is not performed.

Generally, the unreformed gas generation temperature is determined by the introduction amount of the raw fuel into the reforming catalyst in a case that the introduction amount reduction control is not performed. With this reformer system, because the first threshold is predetermined in accordance with the introduction amount of the raw fuel into the reforming catalyst in the case that the introduction amount reduction control is not performed, generation of the unreformed gas can be more effectively prevented.

In addition, the fuel cell system can be configured in such a manner that the control unit, after a first time period has elapsed from start of the introduction amount reduction control, when the temperature detected by the catalyst temperature detecting unit is lower than a second threshold that is higher than the unreformed gas generation temperature and lower than the first threshold, performs introduction stopping control of causing the raw fuel introducing unit to stop introduction of the raw fuel.

With this fuel cell system, when the temperature detected by the catalyst temperature detecting unit is lower than the second threshold that is higher than the unreformed gas generation temperature, the introduction stopping control is performed by the control unit, whereby introduction of the raw fuel is stopped. When the introduction of the raw fuel is stopped in this manner, generation reaction of the reformed gas in the reformer stops, and generation of the unreformed gas is also prevented. Accordingly, the fuel cell can be avoided from being damaged.

In addition, the fuel cell system can be configured in such a manner that the second threshold is predetermined in accordance with the introduction amount of the raw fuel into the reforming catalyst in a case that the introduction amount reduction control is performed.

With this fuel cell system, because the second threshold is predetermined in accordance with the introduction amount of the raw fuel in the case that the introduction amount reduction control is performed, generation of the unreformed gas can be more effectively prevented.

In addition, the fuel cell system can be configured in such a manner that the control unit, after a second time period subsequent to the first time period has elapsed from the start of the introduction amount reduction control, when the temperature detected by the catalyst temperature detecting unit is equal to or higher than a third threshold that is higher than the first threshold, releases the introduction amount reduction control.

With the fuel cell system, when the temperature detected by the catalyst temperature detecting unit is equal to or higher than the third threshold that is higher than the first threshold, by the control unit, the introduction amount reduction control of the raw fuel is released. By this control, in the reformer, it is possible to recover the generated amount of the reformed gas while preventing generation of the unreformed gas. Accordingly, it is possible to recover the amount of power generation in the fuel cell without damaging the fuel cell.

In addition, the fuel cell system can be configured in such a manner that it further includes a cell unit temperature detecting unit for detecting temperature of the cell unit, and the control unit, after the second time period subsequent to the first time period has elapsed from the start of the introduction amount reduction control, when the temperature detected by the catalyst temperature detecting unit is equal to or higher than the third threshold that is higher than the first threshold and also the temperature detected by the cell unit temperature detecting unit is equal to or higher than a fourth threshold that is predetermined, releases the introduction amount reduction control.

With this fuel cell system, when the temperature detected by the catalyst temperature detecting unit is equal to or higher than the third threshold that is higher than the first threshold and also the temperature detected by the cell unit temperature detecting unit is equal to or higher than the fourth threshold that is predetermined, by the control unit, the introduction amount reduction control of the raw fuel is released. This control enables the reformer to recover the generated amount of the reformed gas while preventing generation of unreformed gas, and also enables the fuel cell to generate optimum power in the cell unit using the reformed gas for which the generated amount has been recovered. Accordingly, it is possible to recover the amount of power generation in the fuel cell without damaging the fuel cell.

In addition, the fuel cell system can be configured in such a manner that the third threshold is predetermined in accordance with the introduction amount of the raw fuel into the reforming catalyst in the case that the introduction amount reduction control is performed.

With this fuel cell system, because the third threshold is predetermined in accordance with the introduction amount of the raw fuel into the reforming catalyst in the case that the introduction amount reduction control is performed, generation of the unreformed gas can be more effectively prevented.

In addition, the fuel cell system can be configured in such a manner that the fourth threshold is predetermined in accordance with the introduction amount of the raw fuel into the reforming catalyst in the case that the introduction amount reduction control is not performed.

With this fuel cell system, because the fourth threshold is predetermined in accordance with the introduction amount of the raw fuel into the reforming catalyst in the case that the introduction amount reduction control is not performed, generation of the unreformed gas can be more effectively prevented.

### Advantageous Effects of Invention

According to the present invention, the fuel cell during power generation can be avoided from being damaged.

### Brief Description of Drawings

[Fig. 1] Fig. 1 is a block diagram schematically illustrating one embodiment of a fuel cell system according to the present invention.
[Fig. 2] Fig. 2 is a flowchart illustrating a control procedure in the fuel cell system shown in Fig. 1.
[Fig. 3] Fig. 3 is a flowchart illustrating a control procedure following that of Fig. 2.

### Description of Embodiments

Preferred embodiments of the present invention will now be described with reference to the accompanying drawings.

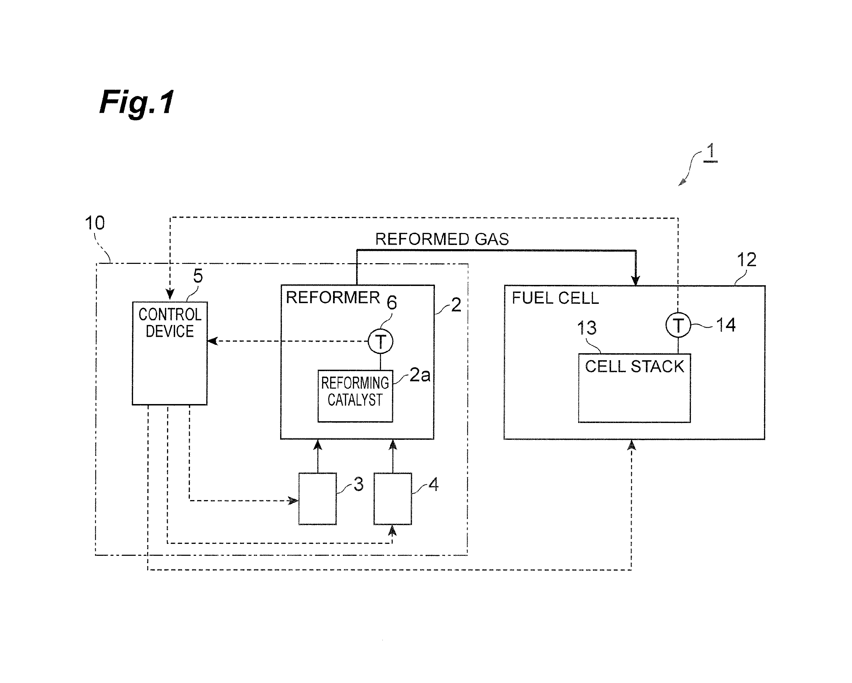

As shown in Fig. 1, a fuel cell system 1 of the present embodiment includes a reformer 2 that generates a reformed gas containing hydrogen by reforming a raw fuel with a reforming catalyst 2a and a solid oxide fuel cell 12 that uses the reformed gas as a fuel.

The reformer 2 subjects the raw fuel and steam (water) to a steam reforming reaction with a reforming catalyst 2a to generate a reformed gas. Because the steam reforming reaction is an endothermic reaction, the reformer 2 utilizes exhaust heat of the fuel cell 12 for the steam reforming reaction. As the reforming catalyst 2a, catalysts known as a steam reforming catalyst can be used.

The raw fuel can be appropriately selected and used from hydrocarbon-based fuels known as raw materials of a reformed gas in the field of solid oxide fuel cells, that is, compounds containing carbon and hydrogen in a molecule (other elements such as oxygen may also be contained) or mixtures thereof. For example, they are compounds containing carbon and hydrogen in a molecule, such as hydrocarbons, alcohols, and ethers. More specifically, examples thereof include hydrocarbons such as methane, ethane, propane, butane, natural gas, liquefied petroleum gas (LPG), city gas, gasoline, naphtha, kerosene, and light oil, alcohols such as methanol and ethanol, and ethers such as dimethyl ether. Among these, kerosene and LPG are preferable because they are easily obtainable. In addition, kerosene and LPG are storable independently, and thus are useful in areas where the line of city gas is not widespread. Furthermore, solid oxide fuel cells utilizing kerosene or LPG are useful as an emergency power source.

The fuel cell 12, using the reformed gas generated by the reformer 2 as a fuel, generates power by a cell stack 13 that is formed by stacking a plurality of cells called SOFC (solid oxide fuel cells). Each of the cells is constituted by arranging an electrolyte containing a solid oxide between a fuel electrode and an air electrode. The electrolyte, containing yttria-stabilized zirconia (YSZ), for example, conducts oxide ions at a temperature of 800°C to 1000°C. The fuel electrode, containing a mixture of nickel and YSZ, for example, generates electrons and water by reaction of oxide ions and hydrogen in the reformed gas. The air electrode, containing lanthanum strontium manganite, for example, generates oxide ions by reaction of oxygen in air and electrons.

In addition, the fuel cell system 1 includes a raw fuel introducing device (raw fuel introducing unit) 3 that introduces the raw fuel into the reforming catalyst 2a, a water introducing device 4 that introduces steam into the reforming catalyst 2a, and air introducing device for a cathode (not depicted) that introduces air into a cathode (air electrode). The raw fuel introducing device 3 has a raw fuel introducing pipe for introducing a raw fuel, an introduction amount regulating valve for regulating the introduction amount of raw fuel, and the like. Similarly, the air introducing device for a cathode has an air introducing pipe for introducing air, an introduction amount regulating valve for regulating the introduction amount of air, and the like. In addition, the water introducing device 4 has a water introducing pipe for introducing water, an introduction amount regulating valve for regulating the introduction amount of water, and the like. In the present embodiment, the water introducing device 4 introduces water into the reformer 2. This water is vaporized by the reformer 2 or a vaporizer provided separately from the reformer 2, and introduced into the reforming catalyst 2a as steam.

Furthermore, the fuel cell system 1 includes a control device (control unit) 5, catalyst temperature detectors (catalyst temperature detecting unit) 6 for detecting the temperature of the reforming catalyst 2a, and cell stack temperature detectors (cell unit temperature detecting unit) 14 for detecting the temperature of the cell stack 13 of the fuel cell 12. The temperature of the reforming catalyst 2a corresponds to the unreformed gas generation information that is information on generation possibility of an unreformed gas. The catalyst temperature detectors 6 correspond to the unreformed gas generation information acquisition unit.

The temperature detectors 6 and 14 are thermocouples, for example. The catalyst temperature detectors 6 are provided at a plurality of positions in the reformer 2, and a temperature measuring junction of each of the catalyst temperature detectors 6 is disposed on a central axis line of a flow path of the raw fuel introduced by the raw fuel introducing device 3. The cell stack temperature detectors 14 are provided at a plurality of positions in the cell stack 13, and a temperature measuring junction of each of the cell stack temperature detectors 14 is disposed on each of the cells constituting the cell stack 13 or near each of the cells.

The control device 5 performs control of starting the whole system in accordance with operation by an operator. In addition, the control device 5 acquires the temperature of the reforming catalyst 2a detected by the catalyst temperature detectors 6 and the temperature of the cell stack 13 detected by the cell stack temperature detectors 14, and controls the raw fuel introducing device 3, the water introducing device 4, and the fuel cell 12 on the basis of the temperature of each unit thus acquired.

In more detail, the control device 5, by executing a predetermined process based on the temperature of the reforming catalyst 2a and the temperature of the cell stack 13, instructs the raw fuel introducing device 3 and the fuel cell 12 to reduce throughput in the reformer 2 and the fuel cell 12 (hereinafter, this instruction is referred to as "the throughput reduction instruction for the reformer 2 and the fuel cell 12"). In other words, the control device 5 performs control (introduction amount reduction control) of causing the raw fuel introducing device 3 to reduce the introduction amount of raw fuel. In addition, the control device 5 performs the reduction control of the introduction amount of raw fuel and control (power generation reduction control) of causing the fuel cell 12 to reduce the amount of power generation. Note that in this reduction control of the amount of power generation for the fuel cell 12, the control device 5 may perform control by which the fuel cell system 1 moves into what is called a "hot standby mode" in which the fuel cell system 1 is kept on standby in a state where the temperature of the cell stack 13 is an operative temperature. The control device 5 may also perform control of causing the water introducing device 4 to reduce the introduction amount of water together with the reduction control of the introduction amount of raw fuel.

Furthermore, the control device 5, by executing the predetermined process based on the temperature of the reforming catalyst 2a and the temperature of the cell stack 13, stops the system. In other words, the control device 5 performs control (introduction stopping control) of causing the raw fuel introducing device 3 to stop introduction of the raw fuel. The control device 5 also performs control of causing the fuel cell 12 to stop power generation together with the introduction stopping control of the raw fuel. In stopping the system, it is preferred to perform reforming while slowly cooling the temperature down to a temperature range in which the fuel cell 12 does not need a gas containing hydrogen. Accordingly, the control device 5 operates to reduce the introduction amount of raw fuel in the raw fuel introducing device 3 in a stepwise or continuous (gradual) manner from regular operation or the hot standby mode. Note that the control device 5 may perform control of causing the water introducing device 4 to stop introduction of water together with the introduction stopping control of the raw fuel. In this case, the control device 5 operates to reduce the introduction amount of water in the water introducing device 4 in a stepwise or continuous (gradual) manner from the regular operation or the hot standby mode.

In addition, the control device 5, by performing the predetermined process based on the temperature of the reforming catalyst 2a and the temperature of the cell stack 13, instructs the raw fuel introducing device 3 and the fuel cell 12 to release reduction of throughput in the reformer 2 and the fuel cell 12 (hereinafter, this instruction is referred to as "the throughput reduction release for the reformer 2 and the fuel cell 12"). In other words, the control device 5 performs control of causing the raw fuel introducing device 3 to increase the introduction amount of raw fuel. The control device 5 also performs control of causing the fuel cell 12 to increase the amount of power generation together with the increase control of the introduction amount of raw fuel. Note that the control device 5 may perform control of causing the water introducing device 4 to increase the introduction amount of water together with the increase control of the introduction amount of raw fuel.

Furthermore, the control device 5 also stores therein a plurality of thresholds (first threshold to fourth threshold) that are criteria for determining whether to move to each control described above or not. These thresholds are thresholds on the temperature of the reforming catalyst 2a and the temperature of the cell stack 13. The control device 5 also stores therein a plurality of periods of time (first time period to third time period) for regulating time for determining whether to move to each control described above or not. The first threshold is a value that is predetermined in accordance with the introduction amount of raw fuel into the reforming catalyst 2a during regular power-generating operation. The second threshold and the third threshold are values that are predetermined in accordance with the introduction amount of raw fuel into the reforming catalyst 2a in the case that the throughput reduction instruction for the reformer 2 and the fuel cell 12 is performed (i.e., after the throughput reduction). The fourth threshold T₄ is a value that is predetermined in accordance with the introduction amount of raw fuel into the reforming catalyst 2a, the amount of power generation, or the like during regular power-generating operation.

In the present embodiment, the reformer system 10 is constituted by the reformer 2, the raw fuel introducing device 3, the water introducing device 4, the control device 5, and the catalyst temperature detectors 6.

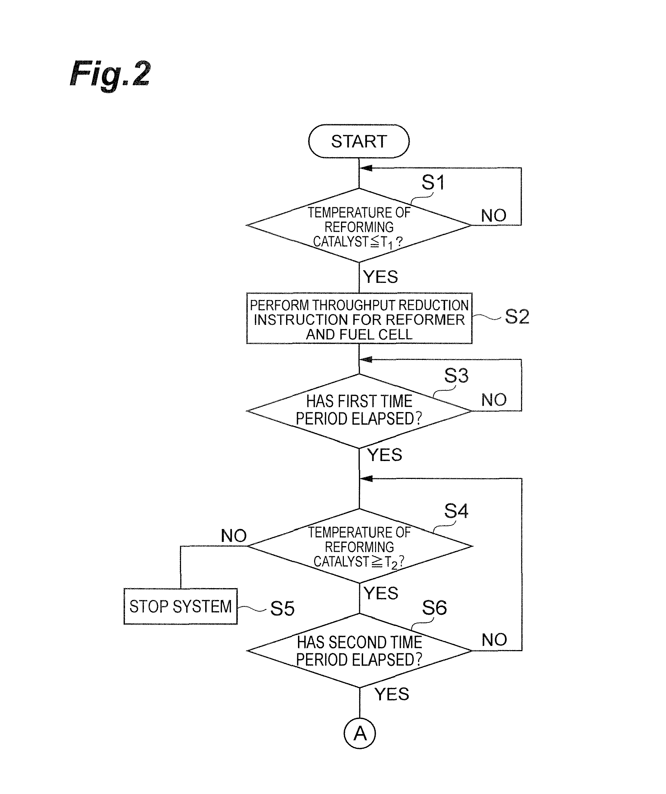

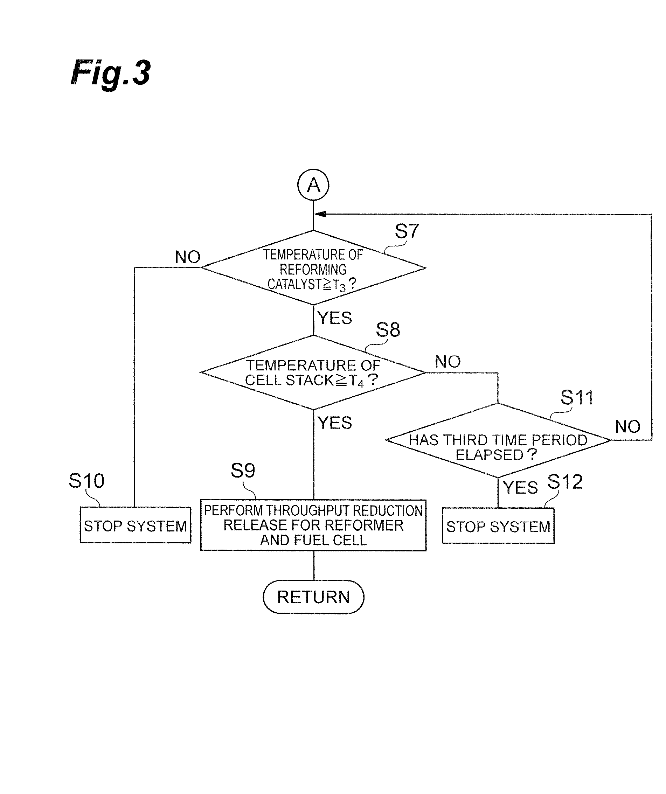

A operation method of the fuel cell system 1 will be described hereinafter with reference to Fig. 2 and Fig. 3. Each process shown in Fig. 2 and Fig. 3 is executed by the control device 5.

To begin with, the whole system is started in response to operation by the operator. More specifically, by the control device 5, the reformer 2, the raw fuel introducing device 3, the water introducing device 4, and the fuel cell 12 are instructed to complete a startup process. By this, the whole system moves into a regular power-generating operation mode (steady operation mode).

Subsequently, as shown in Fig. 2, whether the temperature of the reforming catalyst 2a detected by the catalyst temperature detectors 6 is equal to or lower than the first threshold T₁ or not is determined (step S1). This first threshold T₁ is a temperature between an unreformed gas generation temperature and the temperature of the reforming catalyst 2a during regular power-generating operation and, when the raw fuel is kerosene, for example, is a temperature of 40Q°C to 700°C. In other words, the first threshold T₁ is higher than the unreformed gas generation temperature and lower than the temperature of reforming catalyst 2a during regular power-generating operation. The temperature of the reforming catalyst 2a used for the determination process herein may be the average of a plurality of temperatures detected by the respective catalyst temperature detectors 6, or may be a temperature detected by a specific one of the catalyst temperature detectors 6. Hereinafter, the same applies to determination processes (S4, S7) on the temperature of the reforming catalyst 2a.

Herein, the unreformed gas generation temperature means a temperature at which the raw fuel is not completely reformed with the reforming catalyst 2a, and a hydrocarbon gas having two or more carbons (unreformed gas) that could damage the cells constituting the cell stack 13 of the fuel cell 12 begins to be generated and be mixed into the reformed gas (a slip temperature at which what is called reforming slip starts to occur). The unreformed gas generation temperature and the first threshold T₁ are preset in accordance with the introduction amount of raw fuel into the reforming catalyst 2a when the throughput reduction instruction for the reformer 2 and the fuel cell 12 is not performed, that is, during regular power-generating operation.

When the temperature of the reforming catalyst 2a is higher than the first threshold T₁ the determination process at step S1 is repeated.

When the temperature of the reforming catalyst 2a is equal to or lower than the first threshold T₁, the throughput reduction instruction for the reformer 2 and the fuel cell 12 is performed (step S2). In other words, based on the temperature of the reforming catalyst 2a that is the unreformed gas generation information, control of causing the raw fuel introducing device 3 to reduce the introduction amount of raw fuel is performed. Note that together with the reduction control of the introduction amount of raw fuel, control of causing the water introducing device 4 to reduce the introduction amount of water may be performed. In this case, the introduction amount of steam is reduced in accordance with the reduction of the introduction amount of raw fuel. In addition, control of causing the fuel cell 12 to reduce the amount of power generation is performed. By the control described above, the amount of absorbed heat associated with the steam reforming reaction (endothermic reaction) in the reformer 2 decreases, and thus heat balance in the reformer 2 is improved (returned) to good condition.

Step S1 and step S2 correspond to the introduction amount reduction control step and the power generation reduction step. Note that when the reformer 2 is operated under conditions of excessive steam, at step S2, control of increasing the introduction amount of steam in accordance with the introduction amount of raw fuel may be performed.

Subsequently, whether the first time period has elapsed after the throughput reduction instruction for the reformer 2 and the fuel cell 12 or not is determined (step S3). This first time period is preset in accordance with the introduction amount of raw fuel into the reforming catalyst 2a or the amount of power generation during regular power-generating operation, for example. Alternatively, the first time period may be appropriately set based on the reduced amount of the introduction amount of raw fuel, the reduced amount of the introduction amount of water, or the reduced amount of the amount of power generation at step S2. Herein, when the first time period has not elapsed, the determination process at step S3 is repeated.

When the first time period has elapsed, whether the temperature of the reforming catalyst 2a detected by the catalyst temperature detectors 6 is equal to or higher than the second threshold T₂ or not is determined (step S4). This second threshold T₂ is an index for judging excellence of the heat balance in the reformer 2 and, similarly to the first threshold T₁, is a temperature between the unreformed gas generation temperature and the temperature of the reforming catalyst 2a during regular power-generating operation. Preferably, the second threshold T₂ is higher than the unreformed gas generation temperature and is lower than the first threshold T₁. The second threshold T₂ is appropriately set for each of the catalyst temperature detectors 6.

When the temperature of the reforming catalyst 2a is lower than the second threshold T₂, the system is stopped (step S5). In other words, control of causing the raw fuel introducing device 3 to stop introduction of the raw fuel is performed. Note that together with the introduction stopping control of the raw fuel, the control of causing the water introducing device 4 to stop introduction of water may be performed. Power generation by the fuel cell 12 is also stopped. The stopping control described above may be control by which the fuel cell system 1 moves into what is called a "cold standby mode" in which the fuel cell system 1 is kept on standby in a state where the temperature of the cell stack 13 is a room temperature, or may be control by which the fuel cell system 1 moves into what is called the "hot standby mode" in which the fuel cell system 1 is kept on standby in a state where the temperature of the cell stack 13 is the operative temperature. In this manner, the second threshold T₂ has a meaning as an operative temperature of lower limit. In other words, the second threshold T₂ is a threshold for determining whether or not a possibility of generation of the unreformed gas (reforming slip) becomes extremely high while deterioration of heat balance cannot be stopped even if the throughput in the reformer 2 is reduced. Step S5 is a process for stopping the system because it is determined that the possibility of generation of the unreformed gas is high.

Note that in the stopping control of the system at step S5, it is preferred to perform reforming while slowly cooling the temperature down to the temperature range in which the fuel cell 12 does not need a gas containing hydrogen. Accordingly, the procedure moves to a stopping process for operating to reduce the introduction amount of raw fuel in the raw fuel introducing device 3 in a stepwise or continuous (gradual) manner from regular operation or the hot standby mode. Alternatively, when it is difficult to move to this stopping step, it is possible to immediately stop the introduction amount of raw fuel in the raw fuel introducing device 3.

When the temperature of the reforming catalyst 2a is equal to or higher than the second threshold T₂, whether the second time period has further elapsed after the elapse of the first time period or not is determined (step S6). In other words, after the throughput reduction instruction for the reformer 2 and the fuel cell 12 is started, whether the second time period subsequent to the first time period has elapsed or not is determined. This second time period is appropriately set in accordance with the introduction amount of raw fuel into the reforming catalyst 2a, the amount of power generation in the fuel cell 12, and the like. Herein, when the second time period has not elapsed, the procedure returns to the determination process at step S4.

In the fuel cell system 1, by the processes at steps S4 to S6, the amount of throughput in the reformer and the amount of power generation are temporarily reduced within the second time period. Furthermore, while the heat balance in the reforming catalyst 2a is being monitored for critical deterioration, a standby mode for self-sustaining operation (self-sustaining standby mode) is maintained and excellence of the heat balance is judged within the second time period. When a predetermined heat balance state is not achieved, the system stopping process is executed. When the predetermined heat balance state is achieved within the second time period, the procedure moves to processes described below and the self-sustaining standby mode is continued.

When the second time period has elapsed at step S6, the procedure moves to processes shown in Fig. 3, and whether the temperature of the reforming catalyst 2a detected by the catalyst temperature detectors 6 is equal to or higher than the third threshold T₃ or not is determined (step S7). This third threshold T₃ is an index for judging excellence of the heat balance in the reformer 2 and, similarly to the second threshold T₂, is a temperature between the unreformed gas generation temperature and the temperature of the reforming catalyst 2a during regular power-generating operation. Preferably, the third threshold T₃ is higher than the first threshold T₁ and is equal to or lower than the temperature of the reforming catalyst 2a during regular power-generating operation. The third threshold T₃ is appropriately set for each of the catalyst temperature detectors 6.

When the temperature of the reforming catalyst 2a is equal to or higher than the third threshold T₃, whether the temperature of the cell stack 13 detected by the cell stack temperature detectors 14 is equal to or higher than the fourth threshold T₄ or not is determined (step S8). This fourth threshold T₄ is a temperature lower than the temperature of the cell stack 13 during regular power-generating operation. The fourth threshold T₄ is appropriately set in accordance with the introduction amount of raw fuel into the reforming catalyst 2a, the amount of power generation in the fuel cell 12, and the like during regular power-generating operation. In addition, the temperature of the cell stack 13 used for the determination process herein may be the average of a plurality of temperatures detected by the respective cell stack temperature detectors 14, or may be a temperature detected by a specific one of the cell stack temperature detectors 14.

When the temperature of the cell stack 13 is equal to or higher than the fourth threshold T₄, the throughput reduction release for the reformer 2 and the fuel cell 12 is performed (step S9). In other words, the control of causing the raw fuel introducing device 3 to increase the introduction amount of raw fuel is performed. Note that together with the increasing control of the introduction amount of raw fuel, the control of causing the water introducing device 4 to increase the introduction amount of water may be performed. In addition, the control of causing the fuel cell 12 to increase the amount of power generation is performed. By the control described above, the fuel cell system 1 goes back into a regular power-generating operation mode. Note that when the control of increasing the introduction amount of steam in accordance with the introduction amount of raw fuel was performed at step S2, at this step S9, control of reducing the introduction amount of steam in accordance with the introduction amount of raw fuel is performed. After step S9, the procedure returns to the determination process at step S1.

When the temperature of the reforming catalyst 2a is lower than the third threshold T₃ at step S7, the system is stopped (step S10). The stopping control herein is the same as the stopping process at step S5. In this manner, the third threshold T₃ has a meaning as an operative temperature of lower limit.

When the temperature of the cell stack 13 is lower than the fourth threshold T₄ at step S8, whether the third time period has elapsed after the elapse of the second time period or not is determined (step S11). This third time period is appropriately set in accordance with the introduction amount of raw fuel into the reforming catalyst 2a, the amount of power generation in the fuel cell 12, and the like during regular power-generating operation. Herein, when the third time period has not elapsed, the procedure returns to the determination process at step S7.

When the third time period has elapsed, the system is stopped (step S12). The stopping control herein is the same as the stopping control at steps S5 and S10. In this manner, the fourth threshold T4 has a meaning as an operative temperature of lower limit. In addition, the third time period has a meaning as a time limit in going back into the regular power-generating operation mode.

In the fuel cell system 1, by the processes at steps S7, S8, and S11, the amount of throughput in the reformer and the amount of power generation are temporarily reduced within the third time period. Furthermore, while the heat balance in the reforming catalyst 2a is being monitored for critical deterioration, the self-sustaining standby mode is maintained and excellence of the heat balance is judged within the third time period. When the predetermined heat balance state is not achieved, the system stopping process is executed. When the predetermined heat balance state is achieved within the third time period, determination (countdown) of whether the third time period has completed or not is released, and the procedure moves back to the regular power-generating process.

As described above, in the reformer system 10, the fuel cell system 1, and the operation method thereof, when the temperature of the reforming catalyst 2a detected by the catalyst temperature detectors 6 is equal to or lower than the first threshold T₁ that is higher than the unreformed gas generation temperature, by the control unit 5, the throughput reduction instruction for the reformer 2 and the fuel cell 12 is performed. The reaction that generates the reformed gas by reforming the raw fuel and water with the reforming catalyst is an endothermic reaction. Accordingly, the introduction amount of raw fuel and water is reduced, whereby the amount of absorbed heat decreases together with the generated amount of the reformed gas. This makes it possible to prevent the temperature of the reforming catalyst 2a from falling to the unreformed gas generation temperature. Because of this, generation of the unreformed gas is prevented and the reformed gas is fed to the fuel cell 12. Therefore, the fuel cell 12 during power generation can be avoided from being damaged.

The temperature of the reforming catalyst 2a has a great influence on whether the unreformed gas is generated or not. With this fuel cell system 1, because the temperature of the reforming catalyst is used as the unreformed gas generation information, generation of the unreformed gas is more surely prevented.

In addition, when the introduction amount of raw fuel is reduced, along with this reduction, the generated amount of the reformed gas decreases, but at the same time when the introduction amount of raw fuel is reduced, the fuel cell 12 is caused to reduce the amount of power generation. Accordingly, balance between the reformer 2 and the fuel cell 12 can be preferably maintained.

In addition, in the second time period after the elapse of the first time period, when the temperature detected by the catalyst temperature detectors 6 is lower than the second threshold T₂ that is higher than the unreformed gas generation temperature, the system is stopped by the control device 5. When the system is stopped in this manner, generation reaction of the reformed gas in the reformer 2 stops, and generation of the unreformed gas is also prevented. Accordingly, the fuel cell 12 can be avoided from being damaged. In addition, by providing the second time period that is a temporal criterion for performing the stopping control, stability of the system can be enhanced.

In addition, in the third time period after the elapse of the second time period, when the temperature detected by the catalyst temperature detectors 6 is equal to or higher than the third threshold T₃ that is higher than the first threshold T₁ and also the temperature detected by the cell stack temperature detectors 14 is equal to or higher than the fourth threshold T₄ that is predetermined, by the control device 5, the throughput reduction release for the reformer 2 and the fuel cell 12 is performed. This control enables the reformer 2 to recover the generated amount of the reformed gas while preventing generation of unreformed gas, and also enables the fuel cell 12 to generate optimum power in the cell stack 13 using the reformed gas for which the generated amount has been recovered. Accordingly, it is possible to recover the amount of power generation in the fuel cell 12 without damaging the fuel cell 12.

In addition, in the third time period after the elapse of the second time period, when the temperature detected by the catalyst temperature detectors 6 is lower than the third threshold T₃, the system is stopped by the control device 5. When the system is stopped in this manner, the generation reaction of the reformed gas in the reformer 2 stops, and generation of the unreformed gas is also prevented. Accordingly, the fuel cell 12 can be avoided from being damaged. In addition, by providing the third time period that is a temporal criterion for performing the stopping control, stability of the system can be further enhanced.

In addition, because the first threshold T₁ is predetermined in accordance with the introduction amount of raw fuel into the reforming catalyst 2a during regular power-generating operation, generation of the unreformed gas can be more effectively prevented.

In addition, because the second threshold T₂ and the third threshold T₃ are predetermined in accordance with the introduction amount of raw fuel into the reforming catalyst 2a after the throughput reduction for the reformer 2 and the fuel cell 12, generation of the unreformed gas can be more effectively prevented.

Furthermore, because the fourth threshold T₄ is predetermined in accordance with the introduction amount of raw fuel into the reforming catalyst 2a during regular power-generating operation, generation of the unreformed gas can be more effectively prevented.

Preferred embodiments of the present invention have been described above, but the present invention is not limited to the above-described embodiments. For example, in the above embodiments, a case in which a solid oxide fuel cell is used has been described, but the present invention can be applied to fuel cell systems using a solid polymer fuel cell or a molten carbonate fuel cell.

Furthermore, in the above embodiments, a case has been described in which when the temperature of the reforming catalyst 2a is equal to or higher than the third threshold T₃ in the third time period, whether the temperature of the cell stack 13 is equal to or higher than the fourth threshold T₄ or not is determined, but the determination on the temperature of the cell stack 13 at step S8 can be omitted. In other words, when the temperature of the reforming catalyst 2a is equal to or higher than the third threshold T₃ in the third time period, the power generation reduction release control at step S9 may be performed.

In addition, during regular power-generating operation of the fuel cell 12, the reformer 2 may be used to perform an autothermal reforming (ATR) reaction or a partial oxidation reforming reaction. In these cases also, by reducing the introduction amount of raw fuel into the reforming catalyst 2a of the reformer 2, and by increasing the temperature of the reforming catalyst 2a before the temperature of the reforming catalyst 2a falls to the unreformed gas generation temperature, it is possible to prevent generation of the unreformed gas with a simple configuration when stopping power generation in the fuel cell 12, and thus it becomes possible to avoid the fuel cell 12 from being damaged. Note that in these cases, as the reforming catalyst 2a, catalysts known as an autothermal reforming catalyst or a partial oxidation reforming catalyst can be used.

Furthermore, the fuel cell system 1 can appropriately include known constituents of an indirect internal type SOFC if required. Specific examples thereof include a vaporizer for vaporizing liquid, boosting means such as a pump, a compressor, and a blower for pressurizing various kinds of fluids, flow amount adjusting means or flow path interrupting/switching means such as a valve for adjusting the flow amount of liquid or for interrupting/switching the flow of a fluid, a heat exchanger for performing heat exchange/heat recovery, a condenser for condensing gas, heating/thermally insulating means for externally heating various kinds of devices with steam, for example, storage means for hydrocarbon-based fuels and combustible materials, an air or electric system for instrumentation, a signal system for control, a control device, and an electric system for output and power.

In addition, in the above embodiments, a case has been described in which when the temperature of the reforming catalyst 2a detected by the catalyst temperature detectors 6 is equal to or lower than the first threshold T₁ that is higher than the unreformed gas generation temperature, the throughput reduction instruction for the reformer 2 and the fuel cell 12 is performed by the control device 5, but the criterion for determining whether the throughput reduction instruction is performed is not limited to the temperature of the reforming catalyst 2a.

More specifically, the fuel cell system 1 may include a temperature information acquisition unit that acquires information on the temperature of the reforming catalyst 2a detected by the catalyst temperature detectors 6 and, based on the temperature information acquired by the temperature information acquisition unit, perform the throughput reduction instruction by the control device 5.

In addition, in the above embodiments, a case has been described in which the second threshold and the third threshold are predetermined in accordance with the introduction amount of raw fuel into the reforming catalyst 2a after the throughput reduction for the reformer 2 and the fuel cell 12, but the second threshold and the third threshold may be fixed values regardless of the introduction amount of raw fuel after the throughput reduction.

In addition, the throughput reduction instruction by the control device 5 may be based on not only the information on the temperature of the reforming catalyst 2a, for example, but also on other information. For example, the fuel cell system 1 may include a reforming gas composition detecting device (unreformed gas generation information acquisition unit) for detecting the composition of the reformed gas generated in the reformer 2 (the ratio of hydrogen and the ratio of the unreformed gas, for example) and, base on a result of composition of the reformed gas detected by this reformed gas composition detecting device, perform the introduction amount reduction control or the power generation reduction control by the control device 5. In this case, it can be used as a determination condition for performing the introduction amount reduction control or the power generation reduction control that the ratio of a specific gas (for example, hydrogen) in the reformed gas is equal to or smaller than a predetermined threshold. Herein, the composition of the reformed gas detected by the reformed gas composition detecting device corresponds to the unreformed gas generation information. Alternatively, it is acceptable that information on the temperature of the reforming catalyst 2a or the cell stack 13 and the composition of the reformed gas are acquired as the unreformed gas generating information and, based on this information, the introduction amount reduction control or the power generation reduction control is performed.

In this manner, the throughput reduction instruction is performed by the control unit 5 on the basis of information calculated from various parameters including the temperature of the reforming catalyst 2a, whereby a more reliable system can be constructed.

### Industrial Applicability

According to the present invention, it is possible to avoid the fuel cell during power generation from being damaged.

### Reference Signs List

1... fuel cell system, 2... reformer, 2a... reforming catalyst, 3... raw fuel introducing device (raw fuel introducing unit), 5... control device (control unit), 6... catalyst temperature detectors (catalyst temperature detecting unit), 10... reformer system, 12... fuel cell, 13... cell stack (cell unit), 14... cell stack temperature detectors (cell temperature detecting unit), T₁ to T₄ ... first threshold to fourth threshold

## Claims

1. A fuel cell system comprising:
a reformer that generates a reformed gas containing hydrogen by reforming a raw fuel and water with a reforming catalyst;
a fuel cell that generates power in a cell unit using the reformed gas;
a raw fuel introducing unit that introduces the raw fuel into the reforming catalyst;
an unreformed gas generation information acquisition unit that acquires information on unreformed gas generation in the reforming catalyst; and
a control unit that performs introduction amount reduction control of causing the raw fuel introducing unit to reduce an introduction amount of the raw fuel on the basis of the information on unreformed gas generation acquired by the unreformed gas generation information acquisition unit.

2. The fuel cell system according to claim 1, wherein the control unit further performs power generation reduction control of causing the fuel cell to reduce an amount of power generation.

3. The fuel cell system according to claim 1 or 2, wherein the unreformed gas generation information is temperature of the reforming catalyst and the unreformed gas generation information acquisition unit is a catalyst temperature detecting unit for detecting the temperature of the reforming catalyst.

4. The fuel cell system according to claim 3, wherein the control unit, when the temperature detected by the catalyst temperature detecting unit is equal to or lower than a first threshold that is higher than an unreformed gas generation temperature, performs the introduction amount reduction control of causing the raw fuel introducing unit to reduce the introduction amount of the raw fuel.

5. The fuel cell system according to claim 3 or 4, wherein the control unit, when the temperature detected by the catalyst temperature detecting unit is equal to or lower than the first threshold that is higher than the unreformed gas generation temperature, performs the power generation reduction control of causing the fuel cell to reduce the amount of power generation.

6. The fuel cell system according to claim 4 or 5, wherein the first threshold is predetermined in accordance with the introduction amount of the raw fuel into the reforming catalyst in a case that the introduction amount reduction control is not performed.

7. The fuel cell system according to any one of claims 4 to 6, wherein the control unit, after a first time period has elapsed from start of the introduction amount reduction control, when the temperature detected by the catalyst temperature detecting unit is lower than a second threshold that is higher than the unreformed gas generation temperature and lower than the first threshold, performs introduction stopping control of causing the raw fuel introducing unit to stop introduction of the raw fuel.

8. The fuel cell system according to claim 7, wherein the second threshold is predetermined in accordance with the introduction amount of the raw fuel into the reforming catalyst in a case that the introduction amount reduction control is performed.

9. The fuel cell system according to any one of claims 4 to 8, wherein the control unit, after a second time period subsequent to the first time period has elapsed from the start of the introduction amount reduction control, when the temperature detected by the catalyst temperature detecting unit is equal to or higher than a third threshold that is higher than the first threshold, releases the introduction amount reduction control.

10. The fuel cell system according to any one of claims 4 to 8, further comprising a cell unit temperature detecting unit for detecting temperature of the cell unit, wherein
the control unit, after a second time period subsequent to the first time period has elapsed from the start of the introduction amount reduction control, when the temperature detected by the catalyst temperature detecting unit is equal to or higher than a third threshold that is higher than the first threshold and the temperature detected by the cell unit temperature detecting unit is equal to or higher than a fourth threshold that is predetermined, releases the introduction amount reduction control.

11. The fuel cell system according to claim 9 or 10, wherein the third threshold is predetermined in accordance with the introduction amount of the raw fuel into the reforming catalyst in the case that the introduction amount reduction control is performed.

12. The fuel cell system according to claim 10, wherein the fourth threshold is predetermined in accordance with the introduction amount of the raw fuel into the reforming catalyst in the case that the introduction amount reduction control is not performed.

13. A reformer system comprising:
a reformer that generates a reformed gas containing hydrogen by reforming a raw fuel and water with a reforming catalyst;
a raw fuel introducing unit that introduces the raw fuel into the reforming catalyst;
an unreformed gas generation information acquisition unit that acquires information on unreformed gas generation in the reforming catalyst; and
a control unit that performs introduction amount reduction control of causing the raw fuel introducing unit to reduce an introduction amount of the raw fuel on the basis of the information on unreformed gas generation acquired by the unreformed gas generation information acquisition unit.

14. A method for operating a fuel cell system that comprises a reformer that generates a reformed gas containing hydrogen by reforming a raw fuel and water with a reforming catalyst, a fuel cell that generates power in a cell unit using the reformed gas, a raw fuel introducing unit that introduces the raw fuel into the reforming catalyst, and an unreformed gas generation information acquisition unit that acquires information on unreformed gas generation in the reforming catalyst, the method comprising the step of:
causing the raw fuel introducing unit to reduce an introduction amount of the raw fuel on the basis of the information on unreformed gas generation acquired by the unreformed gas generation information acquisition unit.
